# EUROPÄISCHE PATENTSCHRIFT

(11) **EP 3 594 283 B1**
(45) Veröffentlichungstag und Bekanntmachung des Hinweises auf die Patenterteilung: **07.04.2021**
(21) Anmeldenummer: 18183305.4
(22) Anmeldetag: 13.07.2018
(51) Int. Cl.: C08L 9/06, C08L 7/00, B60C 1/00, C08K 5/372, C08K 5/5419, C08K 5/548, B29B 7/74, C08K 3/36

(54) **SCHWEFELVERNETZBARE KAUTSCHUKMISCHUNG, VULKANISAT UND FAHRZEUGREIFEN**
SULPHUR LINKABLE NATURAL RUBBER MIXTURE AND VEHICLE TYRE
MÉLANGE DE CAOUTCHOUC RÉTICULABLE AU SOUFRE, CAOUTCHOUC VULCANISÉ ET PNEUMATIQUES DE VÉHICULE

(43) Veröffentlichungstag der Anmeldung: 15.01.2020
(73) Patentinhaber: Continental Reifen Deutschland GmbH, 30165 Hannover (DE)
(72) Erfinder: Schöffel, Julia, 30453 Hannover (DE); Müller, Norbert, 29336 Nienhagen (DE); Recker, Carla, 30167 Hannover (DE); Schwekendiek, Kirsten, 31515 Wunstorf (DE)
(74) Vertreter: Continental Corporation

(56) Entgegenhaltungen:
- EP-A1- 2 944 640
- EP-A1- 2 947 087
- EP-A1- 3 260 304
- JP-A- 2002 201 312
- US-A1- 2003 191 270
- US-A1- 2015 329 572
- US-A1- 2017 073 508

## Beschreibung

Die Erfindung betrifft eine schwefelvernetzbare Kautschukmischung, ein Vulkanisat und einen Fahrzeugreifen.

Die WO 2015/172915 A1 offenbart eine Kautschukmischung enthaltend Silan-Kupplungsagenzien mit einer polaren harnstoffhaltigen Abstandsgruppe zwischen Silyl- und Schwefel-Gruppe.

Der vorliegenden Erfindung liegt die Aufgabe zugrunde, ausgehend vom Stand der Technik eine schwefelvernetzbare Kautschukmischung bereitzustellen, die eine Verbesserung im Zielkonflikt aus Rollwiderstand und Nassgriff aufweist, wobei die übrigen Eigenschaften, wie insbesondere Härte und Steifigkeit, zumindest auf einem vergleichbaren Niveau verbleiben oder sogar ebenfalls verbessert werden.

Gelöst wird die Aufgabe erfindungsgemäß dadurch, dass die schwefelvernetzbare Kautschukmischung wenigstens folgende Bestandteile enthält:
- wenigstens einen Dienkautschuk und
- wenigstens eine Kieselsäure und
- wenigstens ein Silans mit der allgemeinen Summenformel

I) [(R¹)ₒSi-(R³-)ₚX-(R⁴-)ₚ]ₘSₙ(R²)₂₋ₘ,

wobei o gleich 1 oder 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß Formel I) über Reste R¹ oder durch Kondensation verbrückt sein; und
wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R³ und R⁴ unabhängig voneinander gleich oder verschieden sein können und verzweigte oder unverzweigte, gesättigte oder ungesättigte, aliphatische, aromatische oder gemischt aliphatische/aromatische C₁-C₃₀-Kohlenwasserstoffgruppen sind, wobei die Indices p unabhängig voneinander Werte von 0 oder 1 annehmen können;
und wobei X ein Rest ist, welcher wenigstens eine polare Gruppe umfasst, die ausgewählt ist aus Urethan-, Amid-, Ester-, Amin-, Thioharnstoff-, Thioamid-, O-Organyl-Thiocarbamat-, S-Organyl-Thiocarbamat-, Amidin-, Guanidin-,
Piperidin-, Maleinsäureanhydrid-, Sulfonamid-, Carbonat-, Imidazolin-, Thiazolidin-, Thiazolidinon-, Pyrrolidin-, Pyrazol-, Benzimidazol-, Indol-, Purin-, Thiazin-, Sulfonat-, und Phosphonat-Gruppen;
und wobei m den Wert 1 oder 2 annimmt und wobei n eine ganze Zahl von 1 bis 10 ist und wobei R² ein Wasserstoffatom oder eine -C(=O)-R⁸ Gruppe ist, wobei R⁸ ausgewählt ist aus Wasserstoff, C₁-C₂₀ Alkylgruppen, C₆-C₂₀-Arylgruppen, C₂-C₂₀-Alkenylgruppen und C₇-C₂₀-Aralkylgruppen.

Überraschenderweise hat sich herausgestellt, dass durch die Kombination der oben genannten Bestandteile eine Verbesserung im Zielkonflikt aus Rollwiderstand und Nassgriff erzielt wird, wobei übrige Eigenschaften, wie insbesondere die Steifigkeit und die Härte, auf einem guten Niveau verbleiben oder sogar ebenfalls verbessert werden, wodurch sich insbesondere bei der Anwendung in Fahrzeugreifen ein vergleichbares oder sogar verbessertes Handling-Verhalten ergibt.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen das wenigstens eine Vulkanisat zumindest im Laufstreifen auf.

Das erfindungsgemäße Vulkanisat und der erfindungsgemäßen Fahrzeugreifen zeichnen sich durch eine Verbesserung im Zielkonflikt aus Rollwiderstand und Nassgriff aus. Gleichzeitig weisen sie ein sehr gutes Handling-Verhalten auf.

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen Kautschukmischung auf.

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Erfindungsgemäß ist die Kautschukmischung schwefelvernetzbar und enthält hierzu wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei bevorzugt ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Die Kautschukmischung ist insbesondere für Fahrzeugreifen geeignet, wobei sie prinzipiell in jedem Bauteil verwendet werden kann, wie insbesondere dem Laufstreifen, der Seitenwand, dem Homprofil, sowie in sonstigen sogenannten Body-Bauteilen.

Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß einer besonders bevorzugten Ausführungsform der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Gemäß einer besonders vorteilhaften Ausführungsform der Erfindung enthält die Kautschukmischung wenigstens ein natürliches Polyisopren und zwar bevorzugt in Mengen von 2 bis 100 phr, und gemäß einer besonders vorteilhaften Ausführungsform der Erfindung 5 bis 30 phr, ganz besonders bevorzugt 5 bis 15 phr. Hiermit werden eine besonders gute Prozessierbarkeit der erfindungsgemäßen Kautschukmischung und optimierte Reißeigenschaften erzielt.

Gemäß einer besonders vorteilhaften Ausführungsform der Erfindung enthält die Kautschukmischung wenigstens ein Polybutadien (Butadienkautschuk) und zwar bevorzugt in Mengen von 2 bis 100 phr, und gemäß einer besonders vorteilhaften Ausführungsform der Erfindung 5 bis 50 phr, ganz besonders bevorzugt 10 bis 25 phr. Hiermit werden besonders gute Abrieb- und Reißeigenschaften und eine gute Prozessierbarkeit bei geringem Hystereseverlust der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 2 bis 100 phr, und gemäß einer besonders vorteilhaften Ausführungsform der Erfindung 25 bis 90 phr, ganz besonders bevorzugt 65 bis 90 phr. Hiermit wird eine gute Prozessierbarkeit bei geringem Hystereseverlust sowie guten Abrieb- und Reißeigenschaften der erfindungsgemäßen Kautschukmischung erzielt.

Bevorzugt ist der SBR hierbei ein SSBR, womit sich optimierte Hysterese-Eigenschaften ergeben.

Gemäß einer besonders vorteilhaften Ausführungsform der Erfindung enthält die Kautschukmischung ein Polymerblend aus zweien oder mehreren der genannten Kautschuke NR, BR und SBR, bevorzugt SSBR, und zwar in sämtlichen denkbaren Kombinationen, wobei die Summe aller enthaltenen Kautschuke 100 phr ergibt.

Eine besonders vorteilhafte Ausführungsform besteht darin, dass die Kautschukmischung 5 bis 20 phr wenigstens eines natürlichen und/oder wenigstens eines synthetischen Polyisoprens und 50 bis 95 phr wenigstens eines Styrol-Butadien-Kautschuks enthält. Hierbei ist sowohl umfasst, dass die Summe 100 phr ergibt, als auch, dass weitere Kautschuke enthalten sind, wodurch sich dann definitionsgemäß 100 phr durch die Summe der Mengen aller festen Kautschuke ergibt.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Erfindungsgemäß enthält die Kautschukmischung wenigstens eine Kieselsäure.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 115 bis 200 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen.

Die erfindungsgemäße Kautschukmischung enthält gemäß einer bevorzugten Ausführungsform der Erfindung 3 bis 500 phr, bevorzugt 3 bis 400 phr, bevorzugt 5 bis 300 phr wenigstens einer Kieselsäure.

Gemäß einer bevorzugten Ausführungsform enthält die Kautschukmischung 10 bis 200 phr und ganz besonders bevorzugt 20 bis 180 phr wenigstens einer Kieselsäure.

Insbesondere mit einer vergleichsweise hohen Kieselsäuremenge von bis 500 phr oder 400 phr oder 300 phr oder 200 phr oder 180 phr ergeben sich in Kombination mit dem erfindungsgemäß enthaltenen und unten näher erläuterten Silan besonders vorteilhafte Eigenschaften hinsichtlich der Reifeneigenschaften der Kautschukmischung und ihrer Vulkanisate, insbesondere optimierte Rollwiderstands-, und Nassgriff-Prediktoren.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Die erfindungsgemäße Kautschukmischung kann ferner wenigstens einen Ruß, insbesondere einen Industrieruß enthalten.

Als Ruße kommen alle der fachkundigen Person bekannten Rußtypen in Frage.

In einer Ausführungsform hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden. Die Gesamtmenge an enthaltenen Rußen kann 0,1 bis 250 phr betragen.

Gemäß einer vorteilhaften Ausführungsform der Erfindung enthält die Kautschukmischung 0 oder 0,1 bis 20 phr, bevorzugt 0 oder 0,1 bis 10 phr wenigstens eines Rußes und 30 bis 500 phr, bevorzugt 30 bis 200 phr wenigstens einer Kieselsäure.

Gemäß einer weiteren vorteilhaften Ausführungsform der Erfindung enthält die Kautschukmischung 30 bis 150 phr wenigstens eines Rußes und 10 bis 50 phr wenigstens einer Kieselsäure und stellt damit eine Teil-Silika-Mischung dar.

Die erfindungsgemäße Kautschukmischung kann weitere Füllstoffe enthalten, beispielsweise in Mengen von 0,1 bis 50 phr. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Die erfindungsgemäße Kautschukmischung enthält wenigstens ein Silan mit der allgemeinen Summenformel I):

I) [(R¹)ₒSi-(R³⁻)ₚX-(R⁴⁻)p]ₘSₙ(R²)₂₋ₘ,

wobei o gleich 1 oder 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß Formel I) über Reste R¹ oder durch Kondensation verbrückt sein; und
wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R³ und R⁴ unabhängig voneinander gleich oder verschieden sein können und verzweigte oder unverzweigte, gesättigte oder ungesättigte, aliphatische, aromatische oder gemischt aliphatische/aromatische C₁-C₃₀-Kohlenwasserstoffgruppen sind, wobei die Indices p unabhängig voneinander Werte von 0 oder 1 annehmen können;
und wobei X ein Rest ist, welcher wenigstens eine polare Gruppe umfasst, die ausgewählt ist aus Urethan-, Amid-, Ester-, Amin-, Thioharnstoff-, Thioamid-, O-Organyl-Thiocarbamat-, S-Organyl-Thiocarbamat-, Amidin-, Guanidin-,
Piperidin-, Maleinsäureanhydrid-, Sulfonamid-, Carbonat-, Imidazolin-, Thiazolidin-, Thiazolidinon-, Pyrrolidin-, Pyrazol-, Benzimidazol-, Indol-, Purin-, Thiazin-, Sulfonat-, und Phosphonat-Gruppen;
und wobei m den Wert 1 oder 2 annimmt und wobei n eine ganze Zahl von 1 bis 10 ist und wobei R² ein Wasserstoffatom oder eine -C(=O)-R⁸ Gruppe ist, wobei R⁸ ausgewählt ist aus Wasserstoff, C₁-C₂₀ Alkylgruppen, C₆-C₂₀-Arylgruppen, C₂-C₂₀-Alkenylgruppen und C₇-C₂₀-Aralkylgruppen.

Dieses Silan gemäß Formel I) dient dabei in der erfindungsgemäßen Kautschukmischung
a) als Kupplungsagens zur Anbindung der in der Kautschukmischung enthaltenen Kieselsäure an die Polymerketten des Dienkautschuks bzw. der Dienkautschuke und/oder
b) zur Oberflächenmodifikation von Kieselsäure durch Anbindung an die Kieselsäure-Partikel ohne Anbindung an die Polymerketten.

Silan-Kupplungsagenzien sind allgemein bekannt und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Einige Silane können zudem an Polymerketten der Kautschuk(e) anbinden.

Erfindungswesentlich ist es, dass das Silan mit der oben genannten Summenformel I) einen Rest X umfassend eine polare Gruppe wie näher spezifiziert aufweist. Diese polare Gruppe ist Teil der Abstandsgruppe -(R³)ₚ-X-(R⁴)ₚ-, die das oder die Siliziumatom(e) mit einem Schwefelatom der Gruppierung Sₙ verknüpft- In der Fachwelt wird eine derartige verknüpfende Gruppe auch Spacer genannt, da sie den Abstand zwischen Silizium (Anbindung an den Füllstoff) und Schwefel (Anbindung an den Dienkautschuk) bestimmt.

Die polare Gruppe ist erfindungsgemäß ausgewählt aus Urethan-, Amid-, Ester-, Amin-, Thioharnstoff-, Thioamid-, O-Organyl-Thiocarbamat-, S-Organyl-Thiocarbamat-, Amidin-, Guanidin-, Piperidin-, Maleinsäureanhydrid-, Sulfonamid-, Carbonat-, Imidazolin-, Thiazolidin-, Thiazolidinon-, Pyrrolidin-, Pyrazol-, Benzimidazol-, Indol-, Purin-, Thiazin-, Sulfonat-, und Phosphonat-Gruppen.

Überraschenderweise werden mit erfindungsgemäß enthaltenen Silanen gemäß Formel I) im Vergleich zu Silanen mit anderen polaren Gruppen, wie insbesondere im Vergleich zu einer polaren Harnstoff-Gruppe, in der Abstandsgruppe zwischen Silizium und Schwefel Verbesserungen der Indikatoren für Rollwiderstand und Nassgriff erzielt, wobei insbesondere auch eine Verbesserung im Zielkonflikt aus den genannten Eigenschaften erzielt wird. Somit liegt die erfindungsgemäße Kautschukmischung enthaltend wenigstens ein Silan gemäß Formel I) auf einem höheren Eigenschaftsniveau, insbesondere hinsichtlich Rollwiderstand und Nassgriff-Prediktoren.

Dabei ist unter "Rest X, welcher wenigstens eine polare Gruppe umfasst" zu verstehen, dass dieser Rest X wenigstens eine polare Funktionalität wie erfindungsgemäß aufgeführt aufweist, aber optional zusätzlich weitere Funktionalitäten oder Kohlenwasserstoffgruppierungen aufweisen kann. Letztere können insbesondere bei verzweigten komplex aufgebauten Resten X vorhanden sein, insbesondere als Nebengruppen.

Die genannten polaren Gruppen sind dabei in die Struktur eingebunden, wodurch sich in der Nomenklatur formal andere Bezeichnungen als die angegebenen ergeben können. Die Reste R³ und R⁴ stellen dabei zusätzliche Kohlenwasserstoffgruppierungen dar, die vorhanden sein können oder nicht, wie unten beschrieben.

Durch die Heteroatome der polaren Funktionalität ergibt sich im Vergleich zu Abstandsgruppen ohne Heteroatome, wie Alkyl-Gruppen, eine größere Polarität innerhalb des Moleküls, wodurch sich im Rahmen der vorliegenden Erfindung die Bezeichnung "polar" ergibt. Kohlenwasserstoff-Reste ohne Heteroatome werden in der Fachwelt allgemein als unpolar eingestuft.

Der Ausdruck "polar" ist als zusätzliche Beschreibung der Gruppe des Restes X zu verstehen, wobei das erfindungswesentliche Merkmal die chemische Spezifikation der Gruppe ist.

In der erfindungsgemäßen Kautschukmischung kann das oben genannte Silan gemäß Formel I) ferner ganz oder teilweise die im Stand der Technik bekannten vergleichsweise unpolaren Silane mit üblicherweise nur einer Propylen-Gruppe als Abstandsgruppe ersetzen, wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik) oder Mercaptosilanen, wie 3-Mercaptopropyltriethoxysilan (z.B. Si263®, Fa. Evonik), oder geblockten Mercaptosilanen, wie 3-Octanoylthio-1-propyltriethoxysilan (z.B. NXT-Silan, Fa. Momentive), bei einer gleichzeitigen Erhöhung der Steifigkeit und einer besseren Prozessierbarkeit, wie beispielsweise einer kürzeren Ausvulkanisationszeit t₉₀.

Bevorzugt beträgt die Menge des wenigstens einen Silans gemäß Formel I) 1 bis 30 phf, bevorzugt 1 bis 22 phr, besonders bevorzugt 2 bis 18,5 phf, ganz besonders bevorzugt 2 bis 10 phf.

Für den Fall, dass die Kautschukmischung zwei oder mehrere verschiedene Silane gemäß Formel I) enthält, beziehen sich die Mengenangaben auf die Gesamtmenge an enthaltenen Silanen gemäß Formel I).

Es ist im Rahmen der vorliegenden Erfindung auch denkbar, dass das oben genannte Silan mit der allgemeinen Summenformel I) in Kombination mit einem oder mehreren Silanen aus dem Stand der Technik eingesetzt wird.

Gemäß besonders vorteilhafter Ausführungsformen ist X ein Rest, welcher wenigstens eine polare Gruppe umfasst, die ausgewählt ist aus Urethan-, Amid-, Ester-, Ether-, Amin-, Thioharnstoff-, Thioamid-, O-Organyl-Thiocarbamat-, S-Organyl-Thiocarbamat-, Amidin-, Guanidin-, Piperidin-, Maleinsäureanhydrid-, Sulfonamid-, Carbonat-Gruppen. Hiermit werden besonders gute Eigenschaften der Kautschukmischung erzielt, insbesondere verbesserte Rollwiderstandsindikatoren bei vergleichbaren oder sogar verbesserten sonstigen Eigenschaften.

Gemäß besonders vorteilhafter Ausführungsformen ist X ein Rest, welcher wenigstens eine polare Gruppe umfasst, die ausgewählt ist aus Urethan- und Amid-Gruppen.

Hiermit werden besonders gute Eigenschaften der Kautschukmischung erzielt, insbesondere verbesserte Rollwiderstandsindikatoren bei vergleichbarer oder sogar verbesserter Härte und Steifigkeit.

Gemäß bevorzugter Ausführungsformen ist n eine ganze Zahl von 2 bis 10, besonders bevorzugt von 2 bis 8. Wiederum bevorzugt von 2 bis 6, ganz besonders bevorzugt von 2 bis 4. Ein Silan gemäß Formel I) mit n größer oder gleich 2 hat den zusätzlichen Vorteil, dass sich bei der Vulkanisation die Schwefel-Schwefel-Bindungen öffnen können, sodass das Silan an der Schwefelvulkanisation teilnehmen und an das oder die Polymere anbinden kann.

Gemäß einer besonders vorteilhaften Ausführungsform der Erfindung ist n gleich 2. Hiermit ergeben sich besonders gute Eigenschaften im Hinblick auf die Prediktoren für Rollwiderstand, Nassgriff sowie die übrigen Eigenschaften, wie die Steifigkeit.

Es können auch zwei oder mehrere Silane gemäß Formel I) mit unterschiedlichen Werten für n im Gemisch vorliegen, sodass sich im Mittel für n eine Bruchzahl ergeben kann. Die Bestimmung des Schwefelgehaltes (Wert für n) erfolgt mittels ¹H-NMR.

Der Index m kann die Werte 1 oder 2 annehmen. Somit kann die Gruppe

V) [(R¹)ₒSi-(R³-)ₚX-(R⁴-)p]

einmal oder zweimal pro Molekül vorhanden sein.

Gemäß einer vorteilhaften Ausführungsform der Erfindung ist m gleich 2, womit der Schwefel an zwei Gruppen V) gebunden ist, sodass in diesem Fall kein Rest R² im Molekül vorhanden ist. Die beiden Gruppen V) sind damit über die Gruppierung Sₙ mit n = 1 bis 10 verknüpft, also über ein Schwefelatom oder eine Kette von 2 bis 10 Schwefelatomen. Bevorzugt ist n hierbei eine ganze Zahl von 2 bis 10, besonders bevorzugt von 2 bis 8. Wiederum bevorzugt von 2 bis 6, ganz besonders bevorzugt von 2 bis 4.

Gemäß einer weiteren vorteilhaften Ausführungsform der Erfindung ist m gleich 1 und hierbei bevorzugt n gleich 1.

Für den Fall, dass m = 1 ist, ist damit ein Rest R² an das von der Silyl-Gruppe am weitesten entfernte Schwefelatom gebunden.

R² ist ein Wasserstoffatom oder eine -C(=O)-R⁸ Gruppe, wobei R⁸ ausgewählt ist aus Wasserstoff, C₁-C₂₀ Alkylgruppen, C₆-C₂₀-Arylgruppen, C₂-C₂₀-Alkenylgruppen und C₇-C₂₀-Aralkylgruppen.

Die Gruppierung -C(=O)-R⁸ Gruppe ist dabei eine Schutzgruppe, sodass das resultierende Silan auch als geschütztes oder geblocktes Mercaptosilan bezeichnet werden kann.

Mit R² gleich Wasserstoffatom handelt es sich um ein ungeblocktes (ungeschütztes) Mercaptosilan.

Es können auch verschiedene Silane mit verschiedenen Möglichkeiten für R² im Gemisch vorliegen.

Bevorzugt ist R² eine -C(=O)-R⁸ Gruppe, wobei R⁸ besonders bevorzugt eine C₁-C₂₀ Alkylgruppe ist; R² ist hierbei somit eine Alkanoylgruppe.

Gemäß einer vorteilhaften Ausführungsform weist die Alkanoylgruppe insgesamt 1 bis 3 Kohlenstoffatome, insbesondere 2 Kohlenstoffatome auf.

Gemäß einer weiteren vorteilhaften Ausführungsform weist die Alkanoylgruppe insgesamt 7 bis 9 Kohlenstoffatome, insbesondere 8 Kohlenstoffatome auf.

Unter Silyl-Gruppe wird im Rahmen der vorliegenden Erfindung die Gruppierung

IV) (R¹)ₒSi- verstanden.

Sämtliche genannten Reste R¹ und Verbrückungen von einem oder mehreren Silanen über Reste R¹ können innerhalb einer Silyl-Gruppe miteinander kombiniert sein.

Für den Fall, dass zwei R¹ einer Dialkoxygruppe mit 2 bis 10 Kohlenstoffatomen entsprechen und dann o < 3 (o kleiner drei) ist, ist das Siliziumatom Teil eines Ringsystems.

Für den Fall, dass zwei Silane gemäß Formel I) mit einander verbrückt sind, teilen sie sich einen Rest R¹ oder sind durch Kombination zweier Si-R¹-Gruppen miteinander über ein Sauerstoffatom verknüpft. Auf diese Weise können auch mehr als zwei Silane aneinander verknüpft sein. Im Anschluss an die Synthese des Silans gemäß Formel I) ist es somit denkbar, dass zwei Silane gemäß Formel I) über ein Sauerstoffatom oder die Reste R¹ miteinander verbrückt werden. Auf diese Weise können auch mehr als zwei Silane aneinander verknüpft werden, wie beispielsweise über Dialkoxygruppen.

Die erfindungsgemäße Kautschukmischung kann somit auch Oligomere, die durch Hydrolyse und Kondensation oder durch Verbrücken mittels Dialkoxygruppen als R¹ der Silane der Formel I) entstehen, enthalten.

Die Silane gemäß den Formeln I) umfassen durch die Bedingung, dass in der Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist, jeweils wenigstens einen Rest R¹, der als Abgangsgruppe dienen kann.

Insbesondere sind dies somit Alkoxy-Gruppen, Phenoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 10 Kohlenstoffatomen (C1-C₁₀-Alkylgruppe) oder Alkoxygruppen mit 1 bis 10 Kohlenstoffatomen (C₁-C₁₀-Alkoxygruppe) oder Halogenide umfassen, besonders bevorzugt sind Alkoxygruppen mit 1 bis 10 Kohlenstoffatomen (C₁-C₁₀-Alkoxygruppe).

Gemäß bevorzugter Ausführungsformen ist in jeder Silyl-Gruppe IV) wenigstens ein R¹ eine C₁-C₁₀-Alkoxygruppe, bevorzugt C₁-C₆-Alkoxygruppe.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o gleich 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 10 Kohlenstoffatomen oder Halogenide oder Alkoxygruppen mit 1 bis 10 Kohlenstoffatomen, bevorzugt 1 oder 2 Kohlenstoffatomen, also Methoxygruppen oder Ethoxygruppen, ganz besonders bevorzugt Ethoxygruppen.

Im Rahmen der vorliegenden Erfindung werden Ethoxygruppen in den Formeln der Silane mit EtO bzw. OEt abgekürzt dargestellt. Die beiden Schreibweisen verdeutlichen, dass Alkoxygruppen, wie Ethoxygruppen, über das Sauerstoffatom O an das Siliziumatom Si gebunden sind.

Prinzipiell können die Abkürzungen OEt und EtO aber im Rahmen der vorliegenden Erfindung synonym verwendet werden.

Die Reste R³ und R⁴ sind gemäß vorteilhafter Ausführungsformen bevorzugt Alkylengruppen mit 1 bis 30, bevorzugt 1 bis 10, Kohlenstoffatomen.

Der oder die Reste R³ sind gemäß besonders bevorzugter Ausführungsformen Alkylengruppen mit 2 oder 3 Kohlenstoffatomen, insbesondere n-Propylenreste.

Der oder die Reste R⁴ sind gemäß besonders bevorzugter Ausführungsformen Alkylengruppen mit 1 bis 3, bevorzugt 1 oder 2, Kohlenstoffatomen,

Die Indices p können unabhängig voneinander die Werte 0 oder 1 annehmen, d. h. die Reste R³ und R⁴ sind jeweils unabhängig voneinander im Molekül vorhanden oder nicht vorhanden.

Sofern zwischen einer erfindungsgemäß im Rest X umfassten polaren Gruppe und der Silyl-Gruppe bzw. der Sₙ-Gruppe kein Kohlenstoffatom vorhanden ist, ist der jeweilige Rest R³ bzw. R⁴ nicht vorhanden und das zugehörige p damit null.

Gemäß einer bevorzugten Ausführungsform der Erfindung hat das Silan die folgende Struktur gemäß Formel II):

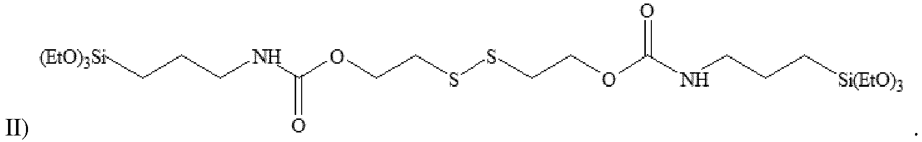

Hierbei sind: m gleich 2, n gleich 2, o gleich 3, alle R¹ Ethoxy, alle p gleich 1, R³ auf beiden Seiten eine Propylengruppe, R⁴ auf beiden Seiten eine Ethylengruppe und X eine Urethan-Gruppe. Der Rest X umfasst hier somit neben der polaren Funktionalität keine zusätzlichen Gruppen.

Mit einem Silan gemäß Formel II) wird der Zielkonflikt aus Rollwiderstand und Nassgriff auf einem besonders hohen Niveau gelöst, d. h. die Kautschukmischung liegt auf einem besonders hohen Eigenschaftsniveau. Gleichzeitig weist die Kautschukmischung mit einem Silan gemäß Formel II) eine vergleichbare oder sogar erhöhte Steifigkeit auf, und zwar insbesondere bei erhöhten und Temperaturen, die im Fahrbetrieb auftreten können. Dies sind wiederum Indikatoren für ein verbessertes Handling-Verhalten.

Gemäß einer bevorzugten Ausführungsform der Erfindung hat das Silan die folgende Struktur gemäß Formel III):

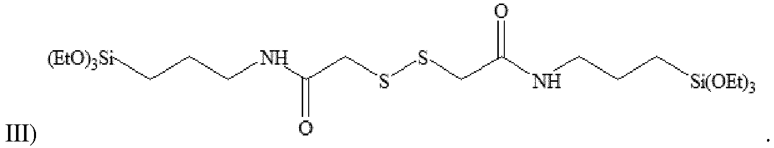

Hierbei sind: m gleich 2, n gleich 2, o gleich 3, alle R¹ Ethoxy, alle p gleich 1, R³ auf beiden Seiten eine Propylengruppe, R⁴ auf beiden Seiten eine Methylengruppe und X eine Amid-Gruppe. Der Rest X umfasst hier somit neben der polaren Funktionalität keine zusätzlichen Gruppen.

Mit einem Silan gemäß Formel III) wird der Zielkonflikt aus Rollwiderstand und Nassgriff auf einem hohen Niveau gelöst, d. h. die Kautschukmischung liegt auf einem hohen Eigenschaftsniveau, insbesondere bei sehr guten Rollwiderstandsindikatoren. Gleichzeitig weist die Kautschukmischung mit einem Silan gemäß Formel III) eine vergleichbare oder sogar erhöhte Steifigkeit und damit verbesserte Handling-Indikatoren auf. Zudem weist eine Kautschukmischung enthaltend wenigstens ein Silan gemäß Formel III) eine verkürzte Ausvulkanisationszeit t₉₀ auf, wodurch sich bei der Herstellung der Kautschukmischung bzw. deren Vulkanisaten eine Energie-, Zeit- und damit Kostenersparnis ergibt.

Es ist auch denkbar, dass die erfindungsgemäße Kautschukmischung ein Gemisch der Silane gemäß der Formeln II) und III) enthält.

Es ist auch denkbar, dass die erfindungsgemäße Kautschukmischung ein Gemisch der Silane gemäß der Formeln II) und III) mit wenigstens einem weiteren Silan der übergeordneten Formel I) enthält.

Die Gesamtmenge an enthaltenen Silanen, die unter die Formel I) fallen, beträgt in jedem Fall 1 bis 30 phf, bevorzugt 1 bis 22 phr, besonders bevorzugt 2 bis 18,5 phf, ganz besonders bevorzugt 2 bis 10 phf.

Gemäß einer vorteilhaften Weiterbildung der Erfindung beträgt die Menge an enthaltenen Silanen (einem oder mehreren) gemäß Formel I) wenigstens 2,5 phf.

Gemäß einer weiteren vorteilhaften Weiterbildung der Erfindung beträgt die Menge an enthaltenen Silanen (einem oder mehreren) gemäß Formel I) wenigstens 3 phf.

Gemäß einer weiteren vorteilhaften Weiterbildung der Erfindung beträgt die Menge an enthaltenen Silanen (einem oder mehreren) gemäß Formel I) wenigstens 3,5 phf.

Insbesondere mit den bevorzugten und besonders bevorzugten Mengen und den genannten Weiterbildungen bzw. Ausführungsformen ergeben sich sehr gute

Rollwiderstandsindikatoren bei gleichzeitiger Verbesserung im Zielkonflikt Rollwiderstand und Nassgriffindikatoren und sehr gute Handling-Prediktoren.

Das oder die erfindungsgemäß enthaltenen Silane gemäß Formel I) können auf einem Träger, beispielsweise Wachs, Polymer oder Ruß, aufgebracht sein, und in dieser Form der Kautschukmischung zugegeben sein. Das oder die erfindungsgemäß enthaltenen Silane gemäß Formel I) können auf einer Kieselsäure aufgebracht sein, wobei die Anbindung physikalisch oder chemisch erfolgt sein kann. Die Aufbringung der erfindungsgemäß enthaltenen Silane auf Kieselsäure verringert z.B. den Ausstoß von flüchtigen Nebenprodukten, wie Ethanol bei der Verwendung von Ethoxy-substituierten Silanen (R¹ = Ethoxy).

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie die der Familie der PPD (Phenylendiamine) und dabei z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Kohlenwasserstoffharzen, Flüssig-Polymeren und Mineralölen.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Gemäß einer bevorzugten Ausführungsform der Erfindung enthält die Kautschukmischung wenigstens ein Flüssig-Polymer als Weichmacher.

Gemäß einer bevorzugten Ausführungsform der Erfindung enthält die Kautschukmischung wenigstens ein Kohlenwasserstoffharz als Weichmacher.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Bei den Monomeren kann es sich um alle dem Fachmann bekannten Monomere von Kohlenwasserstoffharzen handeln, wie aliphatische Cs-Monomere, weitere ungesättigte Verbindungen, die kationisch polymerisiert werden können, enthaltend Aromaten und/oder Terpene und/oder Alkene und/oder Cycloalkene.

In einer bevorzugten Ausführungsform der Erfindung ist das Kohlenwasserstoffharz ausgewählt aus der Gruppe bestehend aus aliphatischen Cs-Harzen und Kohlenwasserstoffharzen aus alpha-Methylstyrol und Styrol.

Das Kohlenwasserstoffharz weist bevorzugt einen Erweichungspunkt gemäß ASTM E 28 (Ring und Ball) von 10 bis 180 °C, besonders bevorzugt von 60 bis 150 °C, ganz besonders bevorzugt von 80 bis 99 °C auf. Weiterhin weist das Kohlenwasserstoffharz bevorzugt ein Molekulargewicht Mw von 500 bis 4000 g/mol, bevorzugt von 1300 bis 2500 g/mol auf

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Die Vulkanisation wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können. Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern und/oder Polyetheramin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die benötigte Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0 bis 5 phr. Für Laufstreifen von Fahrzeugreifen, die in der Regel gegenüber dem Wulst einen geringeren Schwefelgehalt aufweisen, beträgt die Menge an zuzugebenden elementaren Schwefel bevorzugt 0 bis 4 phr.

Gemäß einer vorteilhaften Weiterbildung der Erfindung werden mehrere Beschleuniger eingesetzt.

Gemäß einer vorteilhaften Ausführungsform der Erfindung wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Gemäß einer weiteren vorteilhaften Ausführungsform der Erfindung wird ein Sulfenamidbeschleuniger, besonders bevorzugt CBS, in Kombination mit Polyetheramin-Beschleunigern (beispielsweise Jeffamine® D230) eingesetzt. Die Menge an Polyetheramin-Beschleunigern, beispielsweise Jeffamin® D230) beträgt dabei 0,1 bis 5 phr, bevorzugt 0,1 bis 3 phr, besonders bevorzugt 0,5 bis 2,5 phr, ganz besonders bevorzugt 1 bis 2,5 phr.

Außerdem können in der Kautschukmischung Vulkanisationsverzögerer vorhanden sein. Die Begriffe "vulkanisiert" und "vernetzt" werden im Rahmen der vorliegenden Erfindung synonym verwendet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen Bauteile eines Reifen, wie im Wesentlichen Trennplatte, Innenseele (Innenschicht), Kemprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in den folgenden Tabellen zusammengefasst sind, näher erläutert werden.

Die Vergleichsmischungen sind mit V, die erfindungsgemäßen Mischungen sind mit E gekennzeichnet. Die Mengenangabe der Silane in phf bezieht sich auf 95 phr Kieselsäure. Die erfindungsgemäßen Kautschukmischungen enthalten das Silan gemäß Formel II)

### (Urethan-Silan ^{d)} oder gemäß Formel III) (Amid-Silan ^{e)})

Das Urethan-Silan ^{d)} gemäß Formel II) wurde in Anlehnung an die US 2003/0191270 A1 und das dort genannte Beispiel 1 hergestellt.

Das Amid-Silan ^{e)} gemäß Formel III) wurde folgendermaßen hergestellt:

### Erste Stufe:

184,2 g Thioglykolsäure wurden in 600 g Wasser vorgelegt. 160 g 50%ige Natronlauge wurden langsam zu dosiert. Bei 15 ± 5°C wurden 98,1 g 35%iges Wasserstoffperoxid langsam zu dosiert (starke Exothermie). Dann wurde mit 214 g 32%iger Salzsäure auf pH 2,0 gestellt.

Dann wurde mehrfach mit Methyl-*tert*-butylether extrahiert und die organische Phase eingedampft. Es wurden 164 g Bis-Carboxymethyl-disulfid mit einem Schmelzpunkt von 102°C erhalten.

### Zweite Stufe:

136,65 g Bis-Carboxymethyl-disulfid aus der ersten Stufe wurden vorgelegt. 267,8 g Thionylchlorid wurden zugegeben und aufgeheizt. Bei 56°C begann die Reaktion unter Gasentwicklung. Nach gut 1 Stunde bei 70°C war die Gasentwicklung beendet. Es wurde 1 Stunde bei 70°C nachgerührt.

Dann wurde das überschüssige Thionylchlorid bis 80°C bei 50 mbar ab destilliert. Das Säurechlorid wurde als Öl erhalten. Dieses wurde in 370 g Dichlormethan gelöst.

### Dritte Stufe:

In einem zweiten Reaktor wurden 334,3 g Aminopropyl-triethoxysilan und 158,5 g Triethylamin in 370 g Dichlormethan gelöst. Bei 40°C wurde über ca. 2 Stunden die Säurechlorid-Lösung aus der zweiten Stufe zu dosiert. Bei der spontan einsetzenden Reaktion fiel Triethylammoniumchlorid aus. Eine Nachreaktion erfolgte über Nacht bei 40°C. Das ausgefallene Triethylammoniumchlorid wurde abfiltriert und mit Dichlormethan gewaschen.

Die Produktlösung wurde bis 140°C bei 20 mbar unter leichtem Stickstoffstrom ausdestilliert. Es wurden als Produkt 440 g eines braunen Öls erhalten, mit folgenden ¹H-NMR-Daten:
Lösemittel CDCl₃, δ3,80 ppm (s, CH₂ Thioglykol), 3,78 ppm (q, CH₂ Ethoxy),
3,70 ppm (m, CH₂), 1,64 ppm (m, CH₂), 1,19 ppm (t, CH₃ Ethoxy), 0,63 ppm (t, CH₂).

Die Mischungsherstellung erfolgte ansonsten nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung der ersten Mischstufe noch einmal durchmischt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t₉₅ (gemessen am Moving Die Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Spannungswert bei 300 % Dehnung (Modul 300, M300) bei Raumtemperatur (RT) oder 70 °C gemäß ISO 37
- Rückprallelastizität bei RT oder 70 °C gemäß ISO 4662
- konditionierte Shore-A-Härte bei RT oder 70 °C in Anlehnung an DIN ISO 7619-1, zehnfach mit 5 MPa vorkonditioniert und anschließend nach ISO 868 geprüft
- maximaler Verlustfaktor tan δ (tangens delta) als Maximalwert über den Dehnungsdurchlauf aus dynamisch-mechanischer Messung bei 55 °C gemäß DIN 53 513, (Tan d max 55 °C)
- Verlustfaktor tan δ (10%) aus RPA (= *engl.* "rubber process analyzer") in Anlehnung an ASTM D6601 vom zweiten Dehnungsdurchlauf bei 1 Hz und 70°C (Tan d (10%) RPA)
- Verlustfaktor tan δ bei 70 °C aus dem kraftkonstanten Temperaturdurchlauf in Anlehnung an DIN 53 513. (Tan d (70 °C))

### Verwendete Substanzen

a) SSBR
b) Kieselsäure VN 3, Fa. Evonik
c) Polares Vergleichssilan (s. WO 2015/172915 A1) 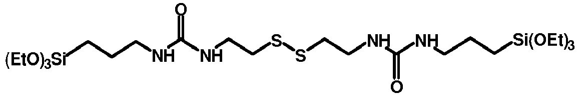
d) Urethan-Silan gemäß Formel II), Herstellung s. oben
e) Amid-Silan gemäß Formel III), Herstellung s. oben
f) DPG und CBS

**Tabelle 1**

| **Bestandteile** | **Einheit** | **V1** | **V2** | **E1** | **E2** |
|---|---|---|---|---|---|
| NR TSR | phr | 20 | 20 | 20 | 20 |
| SSBR ^{a)} | phr | 80 | 80 | 80 | 80 |
| Kieselsäure ^{b)} | phr | 95 | 95 | 95 | 95 |
| Harnstoff-Silan ^{c)} | phf | 9,8 | 11,3 | - | - |
| Urethan-Silan ^{d)} | phf | - | - | 9,8 | 11,3 |
| Weichmacher TDAE | phr | 35 | 35 | 35 | 35 |
| Alterungsschutzm. | phr | 4 | 4 | 4 | 4 |
| Stearinsäure | phr | 2,5 | 2,5 | 2,5 | 2,5 |
| ZnO | phr | 2,5 | 2,5 | 2,5 | 2,5 |
| Beschleuniger ^{f)} | phr | 3,6 | 3,6 | 3,6 | 3,6 |
| Schwefel | phr | 2 | 2 | 2 | 2 |

| **Eigenschaften** | | | | | |
|---|---|---|---|---|---|
| Kond. Shore Härte (RT) | Shore A | 66 | 66,2 | 65 | 66,2 |
| Kond. Shore Härte (70 °C) | Shore A | 61,8 | 61,8 | 61,4 | 62,4 |
| Rückprallelast. (RT) | % | 16,3 | 15,9 | 15,0 | 15,3 |
| Rückprallelast. (70 °C) | % | 38,5 | 39,0 | 41,8 | 42,4 |
| Differenz Rückpr. | | 22,2 | 23,1 | 26,8 | 27,1 |
| Modul 300 (RT) | MPa | 9,8 | 9,9 | 9,8 | 10,6 |
| Modul 300 (70 °C) | MPa | 7,5 | 7,7 | 8,0 | 8,4 |
| Tan d max (55 °C) | MPa | 0,224 | 0,230 | 0,214 | 0,216 |

**Tabelle 2**

| **Bestandteile** | **Einheit** | **V3** | **V4** | **V5** | **E3** | **E4** | **E5** |
|---|---|---|---|---|---|---|---|
| NR TSR | phr | 20 | 20 | 20 | 20 | 20 | 20 |
| SSBR ^{a)} | phr | 80 | 80 | 80 | 80 | 80 | 80 |
| Kieselsäure ^{b)} | phr | 95 | 95 | 95 | 95 | 95 | 95 |
| Harnstoff-Silan ^{c)} | phf | 8,3 | 9,8 | 11,3 | - | - | - |
| Amid-Silan ^{e)} | phf | - | - | - | 7,6 | 8,9 | 10,2 |
| Weichmacher TDAE | phr | 35 | 35 | 35 | 35 | 35 | 35 |
| Alterungsschutzm. | phr | 4 | 4 | 4 | 4 | 4 | 4 |
| Stearinsäure | phr | 2,5 | 2,5 | 2,5 | 2,5 | 2,5 | 2,5 |
| ZnO | phr | 2,5 | 2,5 | 2,5 | 2,5 | 2,5 | 2,5 |
| Beschleuniger ^{f)} | phr | 3,6 | 3,6 | 3,6 | 3,6 | 3,6 | 3,6 |
| Schwefel | phr | 2 | 2 | 2 | 2 | 2 | 2 |

| **Eigenschaften** | | | | | | | |
|---|---|---|---|---|---|---|---|
| t₉₀ | min | 10,1 | 10,2 | 9,1 | 6,3 | 8,8 | 7,6 |
| Rückprallelast. (RT) | % | 16,1 | 15,9 | 15,8 | 14,7 | 15,2 | 14,7 |
| Modul 300 | MPa | 9,2 | 9,6 | 9,9 | 8,9 | 9,8 | 10,1 |
| Tan d (10%) RPA | | 0,230 | 0,229 | 0,223 | 0,214 | 0,224 | 0,214 |
| Tan d (70 °C) | | 0,234 | 0,243 | 0,242 | 0,224 | 0,231 | 0,246 |

Wie Tabelle 1 zu entnehmen ist, werden mit einem erfindungsgemäßen Silan gemäß Formel I) (Beispiel Silan gemäß Formel II)) der Zielkonflikt aus Rollwiderstand und Nassgriff auf einem besonders hohen Niveau gelöst, d. h. die Kautschukmischung liegt auf einem besonders hohen Eigenschaftsniveau. Dies ist insbesondere an der hohen Differenz zwischen den Rückprallelastizitäten (Rückprallelastizität bei 70 °C minus Rückprallelastizität bei RT) erkennbar.

Die Differenz ist deutlich höher als bei einer Kautschukmischung enthaltend ein Silan mit einer Harnstoffgruppe in der Abstandsgruppe.

Gleichzeitig weisen die Kautschukmischung mit einem Silan gemäß Formel II) gegenüber den jeweiligen Vergleichsmischungen mit gleicher Silanmenge eine vergleichbare oder sogar erhöhte Steifigkeit auf, und zwar insbesondere bei erhöhten und Temperaturen, die im Fahrbetrieb auftreten können, wie an den Werten M300 und den konditionierten Shore-Härten bei RT und 70 °C erkennbar.

Wie Tabelle 2 zu entnehmen ist, wird mit einem Silan gemäß Formel III) ebenfalls der Zielkonflikt aus Rollwiderstand und Nassgriff auf einem hohen Niveau gelöst, d. h. die Kautschukmischung liegt auf einem hohen Eigenschaftsniveau, insbesondere bei sehr guten Rollwiderstandsindikatoren. Gleichzeitig weist die Kautschukmischung mit einem Silan gemäß Formel III) eine vergleichbare oder sogar erhöhte Steifigkeit und damit verbesserte Handling-Indikatoren auf, s. Werte für M300. Zudem weist eine Kautschukmischung enthaltend wenigstens ein Silan gemäß Formel III) eine verkürzte Ausvulkanisationszeit t₉₀ auf, wodurch sich bei der Herstellung der Kautschukmischung bzw. deren Vulkanisaten eine Energie-, Zeit- und damit Kostenersparnis ergibt.

Ein erfindungsgemäßer Fahrzeugreifen weist damit ein besseres Eigenschaftsniveau hinsichtlich Rollwiderstand, Nassgriff und Handling-Verhalten auf und lässt sich sogar teilweise energiesparender herstellen.

## Patentansprüche

1. Schwefelvernetzbare Kautschukmischung enthaltend wenigstens folgende Bestandteile:
- wenigstens einen Dienkautschuk und
- wenigstens eine Kieselsäure und
- wenigstens ein Silans mit der allgemeinen Summenformel
I) [(R¹)ₒSi-(R³-)ₚX-(R⁴-)ₚ]ₘSₙ(R²)₂₋ₘ,
wobei o gleich 1 oder 2 oder 3 sein kann und die Reste R¹ gleich oder verschieden voneinander sein können und ausgewählt sind aus C₁-C₁₀-Alkoxygruppen,
C₆-C₂₀-Phenoxygruppen, C₂-C₁₀-cyclischen Dialkoxygruppen,
C₂-C₁₀- Dialkoxygruppen, C₄-C₁₀- Cycloalkoxygruppen, C₆-C₂₀- Arylgruppen,
C₁-C₁₀-Alkylgruppen, C₂-C₂₀- Alkenylgruppen, C₂-C₂₀- Alkinylgruppen,
C₇-C₂₀- Aralkylgruppen, Halogeniden oder
Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß Formel I) über Reste R¹ oder durch Kondensation verbrückt sein; und
wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R³ und R⁴ unabhängig voneinander gleich oder verschieden sein können und verzweigte oder unverzweigte, gesättigte oder ungesättigte, aliphatische, aromatische oder gemischt aliphatische/aromatische C₁-C₃₀-Kohlenwasserstoffgruppen sind, wobei die Indices p unabhängig voneinander Werte von 0 oder 1 annehmen können;
und wobei X ein Rest ist, welcher wenigstens eine polare Gruppe umfasst, die ausgewählt ist aus Urethan-, Amid-, Ester-, Amin-, Thioharnstoff-, Thioamid-, O-Organyl-Thiocarbamat-, S-Organyl-Thiocarbamat-, Amidin-, Guanidin-, Piperidin-, Maleinsäureanhydrid-, Sulfonamid-, Carbonat-, Imidazolin-, Thiazolidin-, Thiazolidinon-, Pyrrolidin-, Pyrazol-, Benzimidazol-, Indol-, Purin-, Thiazin-, Sulfonat-, und Phosphonat-Gruppen;
und wobei m den Wert 1 oder 2 annimmt und wobei n eine ganze Zahl von 1 bis 10 ist und wobei R² ein Wasserstoffatom oder eine -C(=O)-R⁸ Gruppe ist, wobei R⁸ ausgewählt ist aus Wasserstoff, C₁-C₂₀ Alkylgruppen, C₆-C₂₀-Arylgruppen, C₂-C₂₀-Alkenylgruppen und C₇-C₂₀-Aralkylgruppen.

2. Kautschukmischung nach Anspruch 1, **dadurch gekennzeichnet, dass** X ein Rest ist, welcher wenigstens eine polare Gruppe umfasst, die ausgewählt ist aus Urethan-, Amid-, Ester-, Ether-, Amin-, Thioharnstoff-, Thioamid-, O-Organyl-Thiocarbamat-, S-Organyl-Thiocarbamat-, Amidin-, Guanidin-, Piperidin-, Maleinsäureanhydrid-, Sulfonamid-, Carbonat-Gruppen.

3. Kautschukmischung nach Anspruch 1, **dadurch gekennzeichnet, dass** X ein Rest ist, welcher wenigstens eine polare Gruppe umfasst, die ausgewählt ist aus Urethan- und Amid-Gruppen.

4. Kautschukmischung nach Anspruch 1, **dadurch gekennzeichnet, dass** m gleich 2 ist.

5. Kautschukmischung nach Anspruch 1, **dadurch gekennzeichnet, dass** m gleich 1 und n gleich 1 ist.

6. Kautschukmischung nach Anspruch 1, **dadurch gekennzeichnet, dass** wenigstens ein R¹ eine C₁-C₁₀-Alkoxygruppe ist.

7. Kautschukmischung nach Anspruch 1, **dadurch gekennzeichnet, dass** das Silan gemäß Formel I) die folgende Struktur gemäß Formel II) hat:

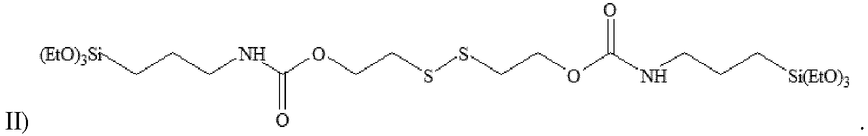

8. Kautschukmischung nach Anspruch 1, **dadurch gekennzeichnet, dass** das Silan gemäß Formel I) die folgende Struktur gemäß Formel III) hat:

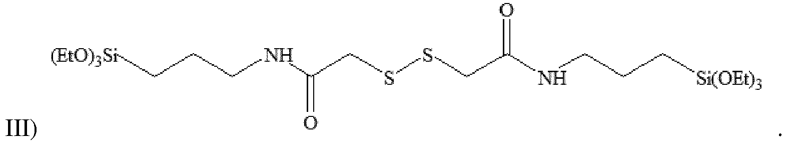

9. Kautschukmischung nach einem der vorherigen Ansprüche, **dadurch gekennzeichnet, dass** sie 5 bis 500 phr wenigstens einer Kieselsäure enthält.

10. Kautschukmischung nach einem der vorherigen Ansprüche, **dadurch gekennzeichnet, dass** der Dienkautschuk ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

11. Vulkanisat, welches durch die Schwefelvulkanisation wenigstens einer Kautschukmischung nach einem der Ansprüche 1 bis 10 erhalten ist.

12. Fahrzeugreifen, **dadurch gekennzeichnet, dass** er in wenigstens einem Bauteil wenigstens ein Vulkanisat nach Anspruch 11 aufweist.

13. Fahrzeugreifen nach Anspruch 12, **dadurch gekennzeichnet, dass** er wenigstens ein Vulkanisat nach Anspruch 11 im Laufstreifen aufweist.

## Claims

1. Sulfur-crosslinkable rubber mixture comprising at least the following constituents:
- at least one diene rubber and
- at least one silica and
- at least one silane having the general empirical formula
I) [(R¹)ₒSi-(R³-)ₚX-(R⁴-)ₚ]ₘSₙ(R²)₂₋ₘ,
where o may be 1 or 2 or 3 and the R¹ radicals may be the same or different and are selected from C₁-C₁₀ alkoxy groups,
C₆-C₂₀ phenoxy groups, C₂-C₁₀ cyclic dialkoxy groups, C₂-C₁₀ dialkoxy groups, C₄-C₁₀ cycloalkoxy groups, C₆-C₂₀ aryl groups,
C₁-C₁₀ alkyl groups, C₂-C₂₀ alkenyl groups, C₂-C₂₀ alkynyl groups,
C₇-C₂₀ aralkyl groups, halides or
alkyl polyether group -O-(R⁶-O)ᵣ-R⁷, where the R⁶ radicals are the same or different and are branched or unbranched, saturated or unsaturated, aliphatic, aromatic or mixed aliphatic/aromatic divalent C₁-C₃₀ hydrocarbon group, r is an integer from 1 to 30 and the R⁷ radicals are unsubstituted or substituted, branched or unbranched monovalent alkyl, alkenyl, aryl or aralkyl groups, or
two R¹ correspond to a dialkoxy group having 2 to 10 carbon atoms, in which case o is < 3,
or two or more silanes of formula I) may be bridged via R¹ radicals or by condensation; and
with the condition that in formula I), there is at least one R¹ selected from those abovementioned options in which this R¹ i) is bonded to the silicon atom via an oxygen atom or ii) is a halide in each (R¹)ₒSi- group;
and the R³ and R⁴ radicals may independently be the same or different and are branched or unbranched, saturated or unsaturated, aliphatic, aromatic or mixed aliphatic/aromatic C₁-C₃₀ hydrocarbon groups, where the indices p may independently assume values of 0 or 1;
and where X is a radical comprising at least one polar group selected from urethane, amide, ester, amine, thiourea, thioamide,
O-organyl thiocarbamate, S-organyl thiocarbamate, amidine, guanidine,
piperidine, maleic anhydride, sulfonamide, carbonate, imidazoline,
thiazolidine, thiazolidinone, pyrrolidine, pyrazole, benzimidazole, indole, purine, thiazine, sulfonate, and phosphonate groups;
and where m assumes the value of 1 or 2 and where n is an integer from 1 to 10 and where R² is a hydrogen atom or a -C(=O)-R⁸ group, where R⁸ is selected from hydrogen, C₁-C₂₀ alkyl groups, C₆-C₂₀ aryl groups, C₂-C₂₀ alkenyl groups and C₇-C₂₀ aralkyl groups.

2. Rubber mixture according to Claim 1, **characterized in that** X is a radical comprising at least one polar group selected from urethane, amide, ester, ether, amine, thiourea, thioamide, O-organyl thiocarbamate, S-organyl thiocarbamate, amidine, guanidine, piperidine, maleic anhydride, sulfonamide, carbonate groups.

3. Rubber mixture according to Claim 1, **characterized in that** X is a radical comprising at least one polar group selected from urethane and amide groups.

4. Rubber mixture according to Claim 1, **characterized in that** m is 2.

5. Rubber mixture according to Claim 1, **characterized in that** m is 1 and n is 1.

6. Rubber mixture according to Claim 1, **characterized in that** at least one R¹ is a C₁-C₁₀ alkoxy group.

7. Rubber mixture according to Claim 1, **characterized in that** the silane of formula I) has the following structure of formula II):

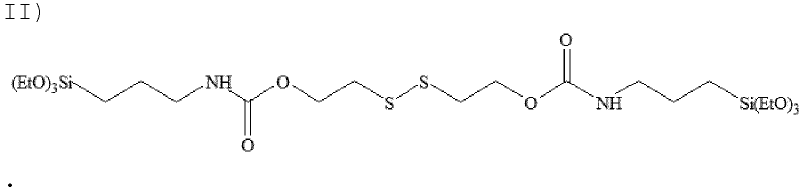

8. Rubber mixture according to Claim 1, **characterized in that** the silane of formula I) has the following structure of formula III):

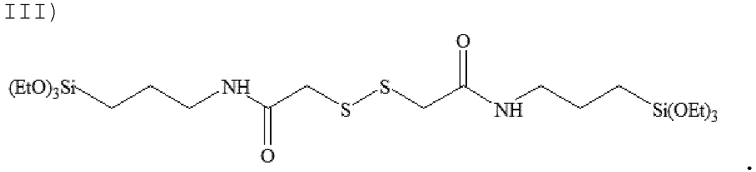

9. Rubber mixture according to any of the preceding claims, **characterized in that** it contains 5 to 500 phr of at least one silica.

10. Rubber mixture according to any of the preceding claims, **characterized in that** the diene rubber is selected from the group consisting of natural polyisoprene (NR), synthetic polyisoprene (IR), butadiene rubber (BR), solution-polymerized styrene-butadiene rubber (SSBR) and emulsion-polymerized styrene-butadiene rubber (ESBR).

11. Vulcanizate obtained by the sulfur vulcanization of at least one rubber mixture according to any of Claims 1 to 10.

12. Vehicle tire, **characterized in that** it includes at least one vulcanizate according to Claim 11 in at least one component.

13. Vehicle tire according to Claim 12, **characterized in that** it includes at least one vulcanizate according to Claim 11 in the tread.

## Revendications

1. Mélange de caoutchouc réticulable au soufre contenant au moins les ingrédients suivants :
- au moins un caoutchouc de diène et
- au moins une silice et
- au moins un silane doté de la formule brute générale
I) [(R¹)ₒSi-(R³-)ₚX-(R⁴⁻)ₚ]ₘSₙ(R²)₂₋ₘ,
o pouvant être égal à 1 ou 2 ou 3 et les radicaux R¹ pouvant être identiques ou différents les uns des autres et étant choisis parmi des groupes C₁₋₁₀-alcoxy, des groupes C₆₋₂₀-phénoxy, des groupes C₂₋₁₀-dialcoxy cycliques, des groupes C₂₋₁₀-dialcoxy, des groupes C₄-₁₀-cycloalcoxy, des groupes C₆₋₂₀-aryle, des groupes C₁₋₁₀-alkyle, des groupes C₂₋₂₀-alcényle, des groupes C₂₋₂₀-alcynyle, des groupes C₇₋₂₀-aralkyle, des halogénures et un groupe alkylpolyéther -O-(R⁶-O)ᵣ-R⁷, les radicaux R⁶ étant identiques ou différents et étant un groupe hydrocarboné divalent en C₁₋₃₀ ramifié ou non ramifié, saturé ou insaturé, aliphatique, aromatique ou mixte aliphatique/aromatique, r étant un nombre entier de 1 à 30 et les radicaux R⁷ étant des groupes monovalents alkyle, alcényle, aryle ou aralkyle, non substitués ou substitués, ramifiés ou non ramifiés, ou
deux R¹ correspondant à un groupe dialcoxy comportant 2 à 10 atomes de carbone, où alors o est < 3,
ou deux silanes selon la formule I) ou plus pouvant être pontés par l'intermédiaire de radicaux R¹ ou par condensation ; et
à la condition que dans la formule I) dans chaque groupe (R¹)ₒSi au moins un R¹ soit choisi parmi les possibilités mentionnées ci-dessus, dans lequel ce R¹ est i) lié à l'atome de silicium par l'intermédiaire d'un atome d'oxygène ou ii) est un halogénure ;
et les radicaux R³ et R⁴ pouvant être indépendamment l'un de l'autre identiques ou différents et étant des groupes hydrocarbonés en C₁₋₃₀ ramifiés ou non ramifiés, saturés ou insaturés, aliphatiques, aromatiques ou mixtes aliphatiques/aromatiques, les indices p pouvant prendre indépendamment l'un de l'autre des valeurs de 0 ou 1 ;
et X étant un radical qui comprend au moins un groupe polaire qui est choisi parmi des groupes uréthane, amide, ester, amine, thiourée, thioamide, O-organyl-thiocarbamate, S-organyl-thiocarbamate, amidine, guanidine, pipéridine, anhydride d'acide maléique, sulfonamide, carbonate, imidazoline, thiazolidine, thiazolidinone, pyrrolidine, pyrazole, benzimidazole, indole, purine, thiazine, sulfonate, et phosphonate ;
et m prenant la valeur de 1 ou 2 et n étant un nombre entier de 1 à 10 et R² étant un atome d'hydrogène ou un groupe -C(=O)-R⁸, R⁸ étant choisi parmi hydrogène, des groupes C₁₋₂₀-alkyle, des groupes C₆₋₂₀-aryle, des groupes C₂₋₂₀-alcényle et des groupes C₇₋₂₀-aralkyle.

2. Mélange de caoutchouc selon la revendication 1, **caractérisé en ce que** X est un radical qui comprend au moins un groupe polaire qui est choisi parmi des groupes uréthane, amide, ester, éther, amine, thiourée, thioamide, O-organyl-thiocarbamate, S-organyl-thiocarbamate, amidine, guanidine, pipéridine, anhydride d'acide maléique, sulfonamide et carbonate.

3. Mélange de caoutchouc selon la revendication 1, **caractérisé en ce que** X est un radical qui comprend au moins un groupe polaire qui est choisi parmi des groupes uréthane et amide.

4. Mélange de caoutchouc selon la revendication 1, **caractérisé en ce que** m est égal à 2.

5. Mélange de caoutchouc selon la revendication 1, **caractérisé en ce que** m est égal à 1 et n est égal à 1.

6. Mélange de caoutchouc selon la revendication 1, **caractérisé en ce qu'**au moins un R¹ est un groupe Ci-io-alcoxy.

7. Mélange de caoutchouc selon la revendication 1, **caractérisé en ce que** le silane selon la formule I) possède la structure suivante selon la formule II) :

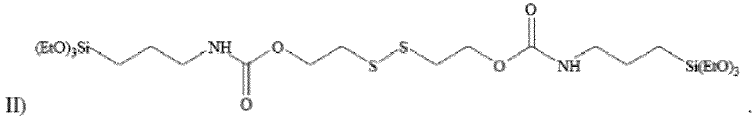

8. Mélange de caoutchouc selon la revendication 1, **caractérisé en ce que** le silane selon la formule I) possède la structure suivante selon la formule III) :

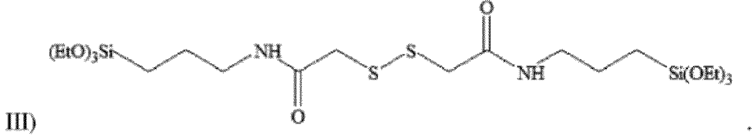

9. Mélange de caoutchouc selon l'une quelconque des revendications précédentes, **caractérisé en ce qu'**il contient 5 à 500 phr d'au moins une silice.

10. Mélange de caoutchouc selon l'une quelconque des revendications précédentes, **caractérisé en ce que** le caoutchouc de diène est choisi dans le groupe constitué par un polyisoprène naturel (NR), un polyisoprène synthétique (IR), un caoutchouc de butadiène (BR), un caoutchouc de styrène-butadiène polymérisé en solution (SSBR) et un caoutchouc de styrène-butadiène polymérisé en émulsion (ESBR).

11. Vulcanisat, qui est obtenu par la vulcanisation au soufre d'au moins un mélange de caoutchouc selon l'une quelconque des revendications 1 à 10.

12. Pneu de véhicule **caractérisé en ce qu'**il présente dans au moins un élément au moins un vulcanisat selon la revendication 11.

13. Pneu de véhicule selon la revendication 12, **caractérisé en ce qu'**il présente au moins un vulcanisat selon la revendication 11 dans la bande de roulement.
